# EUROPÄISCHE PATENTSCHRIFT

(11) **EP 0 535 274 B1**
(45) Veröffentlichungstag und Bekanntmachung des Hinweises auf die Patenterteilung: **13.12.1995**
(21) Anmeldenummer: 91250266.3
(22) Anmeldetag: 01.10.1991
(51) Int. Cl.: B29C 45/76

(54) **Verfahren zur Trendregelung des Umschaltpunktes beim Spritzgiessen**
Method for tendency control of the switching point in an injection moulding process
Méthode pour la régulation de la tendance du point de commutation pour opération de moulage par injection

(43) Veröffentlichungstag der Anmeldung: 07.04.1993
(73) Patentinhaber: MANNESMANN Aktiengesellschaft, 40027 Düsseldorf (DE)
(72) Erfinder: Krosse, Dietmar, D-4736 Wiehe (DE); Schreiner, Helmut, D-8500 Nürnberg (DE); Reichstein, Ulrich Dr. Ing., D-4736 Wiehe (DE)
(74) Vertreter: Meissner, Peter E., Dipl.-Ing.

(56) Entgegenhaltungen:
- EP-A- 0 126 174
- EP-A- 0 233 548
- EP-A- 0 369 220
- EP-A- 0 452 513
- DE-A- 4 035 773
- PLASTVERARBEITER Band 40, Nr. 11, November 1989, Seiten 204,206,208,210, Speyer, DE; W. MICHAELI et al.: "Maschineneinstellung der Nachdruckphase mit der pmT-Steuerung"

## Beschreibung

Die Erfindung betrifft ein Verfahren zur Trendregelung des Umschaltpunktes von Spritzdruck auf Nachdruck bei Spritzgießmaschinen zur Bearbeitung von thermoplastischen Formassen.

üblicherweise wird beim Spritzgießen der Vorgang der Formteilbildung in die drei Phasen unterteilt: Füllen, Spritzdrücken und Nachdrücken. Beim Spritzdrücken wird die Kavität volumetrisch gefüllt, und das thermoplastische Material wird verdichtet. Im Werkzeug wird dabei ein starker Druckanstieg angetroffen, der zum Ende der Spritzphase seinen höchsten Wert erreicht.

In der nachfolgenden Phase kühlt sich das Formeteil ab, wobei sich sein Volumen vermindert. In dieser Phase wird bei konstantem Druckniveau zum bereits eingebrachten Material weiteres Material in die Kavität nachgefördert.

Für ein optimale Prozeßführung ist die Wahl des Umschaltpunktes, die genaue Einhaltung und die Reproduzierbarkeit in jedem Spritzgießzyklus von hoher Bedeutung. Schwankungen des Umschaltpunktes nehmen Einfluß auf den Werkzeuginnendruck und somit auf die Formteilqualität.

Liegt der Umschaltpunkt seitlich zu früh oder bei zu niedrigem Schaltdruck, so kommt es zu einem Einbruch des Werkzeuginnendrucks mit der Folge von Oberflächenmarkerungen durch kurzzeitiges partielles Einfrieren der Fließfront.

Wird zu spät umgeschaltet, so kommt es zu einer Druckspitze mit der negativen Folge der Minderung der Formteilqualität in Form von Schwimmhänten. Zu hoher Druck kann auch zu einer Werkzeugschädigung führen.

Aus "Plastverarbeiter" (Band 40, Nr. 11, November 1989, Seiten 204, 206, 208, 210, Speyer, DE; W. Michaeli et al.: "Maschineneinstellung der Nachdruckphase mit der pmI-Steuerung") ist eine Spritzgießmaschine mit einer Einrichtung zum Umschalten von Spritzdruck auf Nachdruck, bekannt, wobei am Schneckenzylinder und/oder am Werkzeug Einrichtungen zum Messen der Temperatur und/oder der Drucker vorgesehen und diese mit einem Prozessor verbunden sind.
Dieser Prozessor ist wiederum steuerungsmäßig mit einer Umschaltsteuerung zum Umschalten von Spritzdruckern auf Nachdrucker verbunden.

Aus der DE-OS 24 43 938 ist ein Verfahren mit entsprechenden Vorrichtungen beschrieben, bei dem der Umschaltpunkt durch Verlagerung der Formspaltteilzeit oder des Formspaltteilweges verschoben wird und Als Stellgröße für den Formfüllgrad in der Nachdruckphase die dem Formhohlraum zugeführte Gesamtenergie zugrunde gelegt wird. Zur Durchführung des Verfahrens wird ein Meßelement für den Formspalt oder den Forminnendruck vorgeschlagen, das im Bereich der Kavität angeordnet ist.

Das vorgeschlagene Verfahren und seine Einrichtungen sind nicht nur träge sondern auch an für das Werkstück beschädigungsträchtigen Stellen angeordnet, die darüber hinaus negativen Einfluß auf die Formteilqualität nehmen.

In der EP 0 233 548 A 2 wird ein Verfahren zur Regelung und Steuerung und/oder überwachung des Spritzgießprozesses und einer Einrichtung zur Durchführung des Verfahrens aufgezeigt, bei dem Druck- und Zeit-Signale für die Regelung, Steuerung und/oder überwachung des Gießprozesses verwendet werden. Die erkannten Abweichungen werden benutzt, um beim nächsten Maschinenzyklus Prozeßparameter wie Spritzgeschwindigkeit, -Druck oder -Hub, Masse- und/oder Werkzeugtemperatur zu ändern.

Diese Verfahren ist relativ träge und weist darüber hinaus den Nachteil auf, daß Änderungen am Prozeßparameter vorgenommen werden, die ursächlich an der Verschiebung des Umschaltpunktes vom Spritzdrücken auf Nachdrücken nicht beteiligt sind und darüber hinaus aus ihrem optimalen Arbeitspunkt in weniger günstige Bereiche verschuben werden.

Ziel der Erfindung ist es, bei Spritzgießmachinen gattungsgemäßer Art die genannten Nachteile zu vermeiden und ein sicheres und sensibles Verfahren zur Trendregelung sowie überwachung des Schaltpunktes beim Umschalten von der Einspritz- zur Nachdruckphase zu schaffen.

Die Erfindung löst das Problem durch die Merkmale des Ansprüchs 1.

Zur Ermittlung der Meßdaten von Temperatur, Druck oder Kraft sowie Weg oder Zeit werden Meßelemente an wenig störenden Stellen und darüber hinaus in geschützter Lage angeordnet. Vorzugsweise wird der Druck der Hydraulikanlage bzw. die Kraft der Schließeinheit erfaßt, da ein Anbringen der Druckfühler an diesen Einrichtungen einfach ist und keine Behinderung des Formteils in der Kavität hervorrufen.

Zum Erfassen der Zeit ist ein Zeittakter am Prozessor. Zum Erfassen des Weges werden Meßelemente an der Schnecke vorgesehen, da an diesem Bauteil eine sichere und wartungsarme Anordnung der Meßfühler möglich ist.

Das Druck (bzw. Kraft)-/Zeit (bzw. Weg)-Arbeitsfenster ist erfindungsgemäß in folgende Bereiche eingeteilt, u.z.:
- Kernbereich
- Ringbereich
- Flügelbereich.

Im enggefaßten Kernbereich wird der Umschaltpunkt trotz leichter Verschiebung unverändert gelassen. Hiermit werden Unschärfen bei den Messungen aufgefangen, und das Umschaltpunkt-System wird nicht unnötig beunruhigt.

Erst nach Verlassen des Kernbereichs und Eintreten in den Ringbereich wird der Umschaltpunkt aktiv verändert. Hierbei wird der Trend der Umschaltpunkt-Wanderung nicht nur beobachtet und notiert, sondern es wird angemessen entsprechend der Größe der Verlagerung reagiert. Befindet sich der Umschaltpunkt im Ringbereich, so wird schnell aber vorsichtig Einfluß auf den Umschaltpunkt genommen, u.z. ohne unmittelbar bereits jetzt schon Prozeßparameter zu verändern.

Wird also innerhalb des Toleranzfeldes der Zeit (bzw. des Weges) die obere Grenze, nämlich der innere Rand des Ringbereiches, überschritten, so wird eine gleichgerichtete Korrektur durchgeführt, d.h. der Zeitanteil des Umschaltpunktes wird ebenfalls vergrößert. Wird hingegen der untere Rand des Ringfeldes vom Umschaltpunkt aufgrund eines steigenden Druckes (bzw. einer Kraft) überschritten, so wird eine richtungsentgegengesetzte Änderung durchgeführt, es wird nämlich der Druckanteil des Umschaltpunktes gesenkt.

Erst nach Verlassen des Arbeitsfensters und Eintreten in einen Flügelbereich wird Einfluß auf die Prozeßparameter genommen.

Die Trendbeobachtung des Umschaltpunktes bezüglich Druck oder Kraft sowie Zeit oder Weg wird überlagert von der überwachung der Temperatur, u.z. der Masse- oder der Werkzeug-Temperatur. Für diese Temperatur ist ein Toleranzband vorgesehen, das einen Kern- und einen Rand- sowie Flügelbereich aufweist. Der Zeitpunkt der Messung der genannten Temperatur ist abhängig von der Zeit bzw. dem Weg des Umschaltpunktes. Die Kenntnis der Lage des aktuellen Temperaturpunktes wird verwandt zur Beeinflussung der Lage des Umschaltpunktes.

Dabei kann eine Situation auftreten, daß aufgrund der Druckmessung der Umschaltpunkt zu einem Feld niedrigeren Drucks aufgrund der vorliegenden Temperaturmessung aber in ein Feld höheren Drucks verschoben werden sollte und somit im Endeffekt überhaupt nicht bewegt zu werden braucht. Solche in Summe richtige Entscheidungen tragen zu einer Beruhigung des Meß- und Regelsystems bei.

In Kenntnis des Trends der Bewegung des Umschaltpunktes kann rechtzeitig erkannt werden, wann und wo der Ringbereich voraussichtlich verlassen wird und in welchem Flügelbereich der Umschaltpunkt wandert. Es besteht also die Möglichkeit, deutlich früher als gewöhnlich die erkennbar richtige Entscheidung zu treffen und bei Erreichen des Flügelbereiches die technisch-taktisch einen den größten Erfolg versprechenden Prozeßparameter zu verändern.

Ein Beispiel der Erfindung ist in den Zeichnungen dargelegt, es zeigen:
- Fig. 1: ein Schema der Spritzgießmaschine, einschließlich der Meß- und Regeleinrichtung,
- Fig. 2: Arbeitsfenster
- Fig. 3: Arbeitsband
- Fig. 4: Umschaltwürfel.

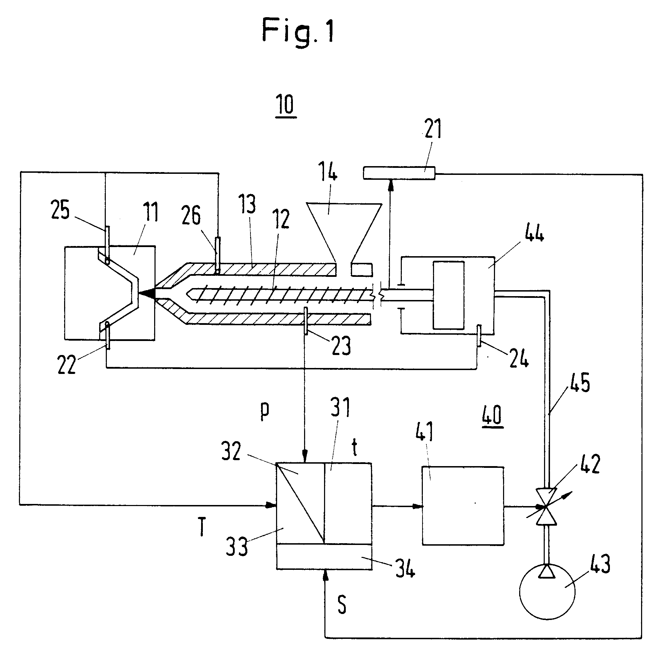

Die Fig. 1 zeigt schematisch eine Spritzgießmaschine 10 mit einer in einem Schneckenzylinder 13 befindlichen Schnecke 12 und einer Materialzufuhr 14. Der Schneckenzylinder 13 steht in Verbindung mit einem Werkzeug 11. Die Schnecke 12 wird von einem Druckzylinder 44 einer hydraulischen Antriebseinrichtung 40 angetrieben.

An der Spritzgießmaschine 10 und dem Antrieb 40 sind folgende Meßaufnehmer vorgesehen:
zum Messen des Weges S der Schnecke der Wegaufnehmer 21,
zum Messen des Druckes P in der Kavität und im Schneckenzylinder die Druckaufnehmer 22 und 23,
zum Aufnehmen des Druckes P in der Antriebseinrichtung der Druckaufnehmer 24,
zum Messen der Temperatur T in der Kavität sowie dem Schneckenzylinder die Temperaturfühler 25 und 26.

Die Meßsignale für die Strecke s, den Druck p, die Temperatur T werden einer Signalerfassungs- und Verarbeitungseinrichtung, dem Prozessor 30, zugeführt. Der Prozessor 30 weist dabei Verarbeitungselemente für Druck 32, für Temperatur 33 und für den Weg 34 sowie einen Zeitzähler 31 für die Zeit t auf.

Die vier Verarbeitungselemente 31 bis 34 sind beliebig untereinander verknüpfbar. So kann beispielsweise die exakte Position s der Schnecke zu einem bestimmten Zeitpunkt t überprüft werden. Mit diesem sicheren Wissen der exakten Zeit-/Positions-Lage kann dann der Druck p oder die Temperatur T abgefragt werden.

Der Prozessor 30 ist steuerungsmäßig mit der Umschaltsteuerung 41 der Antriebseinrichtung 40 verbunden. Die Umschaltsteuerung 41 steht dabei mit einem Umschaltelement 42 in Verbindung, das in der Hydraulikleitung 45, die zwischen der Pumpe 43 und dem Druckzylinder 44 liegt, angeordnet ist.

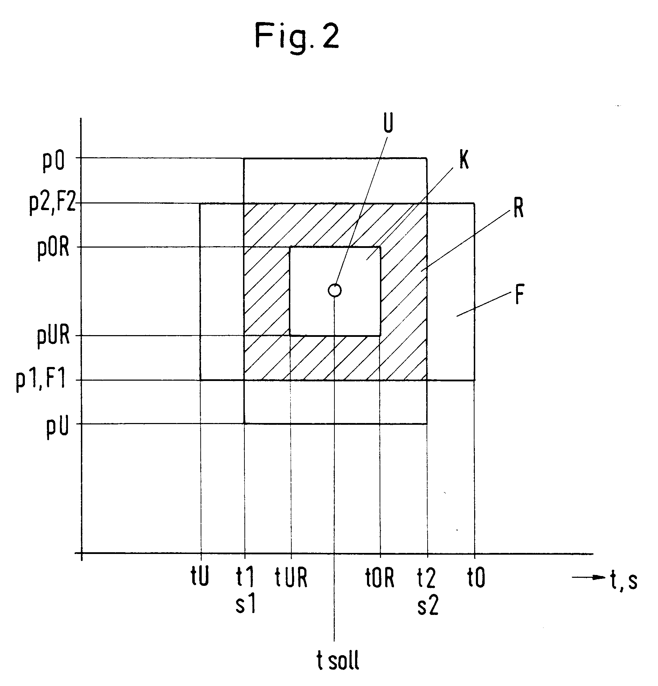

Die Fig. 2 zeigt das Arbeitsfenster für Druck p bzw. Kraft F und der Zeit t bzw. der Strecke s.

Das Fenster ist unterteilt in einen Kernbereich K, einen Ringbereich R und einen Flügelbereich F.

Der Ringbereich, welcher sowohl an den Kern wie an den Flügelbereich angrenzt, wird begrenzt durch p2, F2 sowie p1, F1 und t1, f1 sowie t2, f2. als äußere Umrandung und pOR, pUR, tOR, tUR als innere Umrandung. Die Sollage des Umschaltpunktes U befindet sich im Kernbereich K.

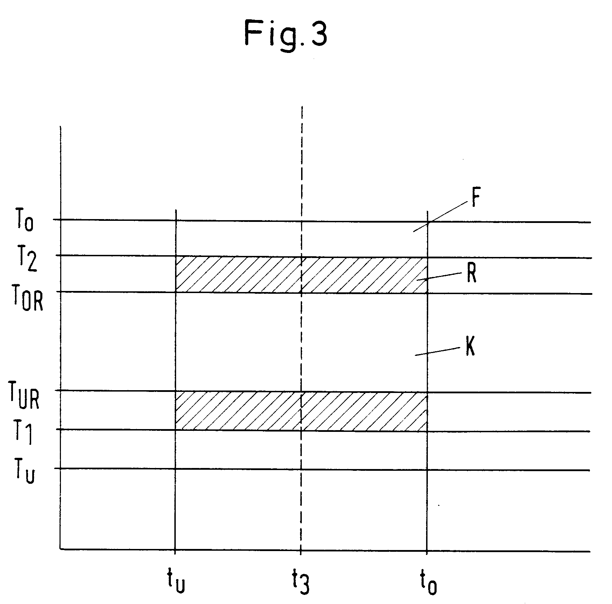

Die Fig. 3 zeigt das Arbeitsband mit den äußeren Grenzen TO und TU, die die Flügelbereich F abgrenzen. Mit R wird ein Band bezeichnet, das zwischen T2 und TOR sowie TUR und T1 sich befindet. Der Kernbereich K wird abgegrenzt durch TOR und TUR. Das Gesamtband wird abgeschnitten durch die Begrenzung tU sowie tO. Zwischen den Zeitgrenzen tu und to befindet sich der Zeitpunkt t3.

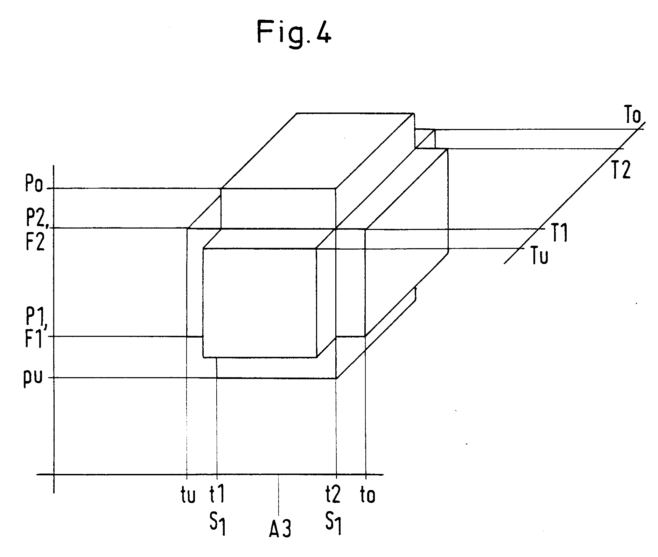

In der Fig. 4 ist der Umschaltwürfel dargestellt, wobei die Benennung der einzelnen Grenzen denen der Fig. 2 und 3 entspricht.

## Patentansprüche

1. Verfahren zur Trendregelung des Umschaltpunktes von Spritzdruck auf Nachdruck bei Spritzgießmaschinen zur Bearbeitung von thermoplastischen Formmassen,
gekennzeichnet durch folgende Merkmale:
a) Sollvorgabe eines Arbeitsfensters mit den Begrenzungen unterer und oberer Druck bzw. Kraft und Zeit bzw. Weg;
b) Sollvorgabe eines Arbeitsbandes mit den Begrenzungen oberer und unterer Temperatur;
c) Festlegen des Umschaltpunktes innerhalb des Arbeitsfensters, bei dem zu einem vorgegebenen Druck bzw. einer Kraft und zu einer vorgegebenen Zeit bzw. eines Weges von Spritzdruck auf Nachdruck geschaltet wird;
d) je Spritzzyklus jeweils zum Zeitpunkt des Umschaltens Messen des aktuellen Druckes bzw. der Kraft und Vergleichen mit den Sollvorgaben des Arbeitsfensters;
e) bei positivem Befund nach Vergleichen mit den Sollvorgagen des Arbeitsfensters Messen der aktuellen Temperatur und Vergleich mit den Sollvorgaben des Arbeitsbandes;
f) in Abhängigkeit der Größe der Unterschiede zu den Sollvorgaben des Arbeitsfensters und des Arbeitsbandes Verschieben des Umschaltpunktes nach folgender Maßgabe:
aa) gleichgerichtetes Ändern der Zeit bzw. des Weges,
bb) richtungsentgegengesetztes Ändern des Druckes bzw. der Kraft,
cc) bei Veränderung der Temperatur richtungsentgegengesetztes Ändern des Druck- bzw. Kraftanteils.

2. Verfahren nach Anspruch 1,
dadurch gekennzeichnet,
daß die Verschiebungsgröße des Umschaltpunktes in Abhängigkeit seiner Lage im Arbeitsfeld durchgeführt wird.

3. Verfahren nach Anspruch 2,
dadurch gekennzeichnet,
daß der Umschaltpunkt in seiner Größe proportional zur Entfernung vom Zentrum des Arbeitsfeldes verschoben wird.

4. Verfahren nach Anspruch 1,
dadurch gekennzeichnet,
daß die Umschaltpunkte jedes einzelnen Zyklus festgehalten und dokumentiert werden.

5. Verfahren nach Anspruch 4,
dadurch gekennzeichnet,
daß in Abhängigkeit des Trends der Umschaltpunkte innerhalb des Arbeitsfensters bestimmte Prozeßparameter überwacht werden.

6. Verfahren nach Anspruch 5,
dadurch gekennzeichnet,
daß bei steigendem Druckanteil der Trend der Werkzeugtemperatur überwacht wird.

7. Verfahren nach Anspruch 5,
dadurch gekennzeichnet,
daß bei sinkendem Druck der Trend der Massetemperatur überwacht wird.

## Claims

1. A method for tendency regulation of the switch-over point from injection pressure to follow-up pressure in injection-moulding machines for the processing of thermoplastic moulding compounds, characterised by the following features:
a) desired preset of an operating window with the limits of lower and upper pressure or force and time or path;
b) desired preset of an operating band with the limits of upper and lower temperature;
c) setting of the switch-over point within the operating window at which the switch from injection pressure to follow-up pressure is effected at a predetermined pressure or a force and at a predetermined time or a path;
d) per injection cycle each time at the time of switching-over measurement of the current pressure or the force and comparison with the desired presets of the operating window;
e) in the event of a positive result after comparison with the desired presets of the operating window measurement of the current temperature and comparison with the desired presets of the operating band;
f) dependent on the size of the differences of the desired presets of the operating window and the operating band displacement of the switch-over point according to the following stipulation:
aa) equidirectional change of the time or the path,
bb) opposed-direction change of the pressure or the force,
cc) upon change of the temperature opposed-direction change of the pressure or force component.

2. A method according to Claim 1, characterised in that the displacement amount of the switch-over point is effected dependent on its position in the operating field.

3. A method according to Claim 2, characterised in that the switch-over point is displaced in its amount proportionally to the distance from the centre of the operating field.

4. A method according to Claim 1, characterised in that the switch-over points of each individual cycle are retained and documented.

5. A method according to Claim 4, characterised in that certain process parameters are monitored depending on the tendency of the switch-over points within the operating window.

6. A method according to Claim 5, characterised in that when the pressure component rises the trend of the mould temperature is monitored.

7. A method according to Claim 5, characterised in that when the pressure falls the trend of the compound temperature is monitored.

## Revendications

1. Procédé pour réguler la tendance du point de commutation de la pression d'injection à la pression de maintien, dans des machines à couler par injection, pour le traitement de matières moulables thermoplastiques,
caractérisé par les caractéristiques suivantes :
a) détermination de la valeur prescrite d'une fenêtre de travail avec les limitations de pression inférieure et supérieure ou de force et de temps ou de course ;
b) détermination de la valeur prescrite d'une bande de travail avec les limitations de température supérieure et inférieure ;
c) fixation d'un point de commutation à l'intérieur de la fenêtre de travail, pour lequel à une pression ou une force prédéfinie et à une durée ou une course prédéfinie, on commute de la pression d'injection à la pression de maintien ;
d) pour chaque cycle d'injection, à chaque fois au moment de la commutation, mesure de la pression ou de la force actuelle et comparaison aux valeurs prescrites de la fenêtre de travail ;
e) lors d'un résultat positif pour la comparaison aux valeurs prescrites de la fenêtre de travail, mesure de la température actuelle et comparaison aux valeurs prescrites de la bande de travail ;
f) en dépendance de l'importance des différences par rapport aux valeurs prescrites de la fenêtre de travail et de la bande de travail, déplacement du point de commutation selon les considérations suivantes :
aa) modification dans le même sens de la durée ou de la course,
bb) modification dans le sens contraire de la pression ou de la force,
cc) lors d'une modification de la température, modification dans le sens contraire de la partie de pression ou de force.

2. Procédé selon la revendication 1,
caractérisé en ce que l'importance du déplacement du point de commutation est obtenue en dépendance de sa position dans le champ de travail.

3. Procédé selon la revendication 2,
caractérisé en ce que le point de commutation est déplacé en importance proportionnellement à la distance par rapport au centre du champ de travail.

4. Procédé selon la revendication 1,
caractérisé en ce que les points de commutation de chaque cycle individuel sont enregistrés et documentés.

5. Procédé selon la revendication 4,
caractérisé en ce qu'en dépendance de la tendance des points de commutation à l'intérieur de la fenêtre de travail, des paramètres de processus déterminés sont surveillés.

6. Procédé selon la revendication 5,
caractérisé en ce que, pour une partie de pression croissante, la tendance de la température de l'outil est surveillée.

7. Procédé selon la revendication 5,
caractérisé en ce que, pour une pression décroissante, la tendance de la température de la matière est surveillée.
